# EUROPÄISCHE PATENTSCHRIFT

(11) **EP 0 652 990 B1**
(45) Veröffentlichungstag und Bekanntmachung des Hinweises auf die Patenterteilung: **12.03.1997**
(21) Anmeldenummer: 94917655.6
(22) Anmeldetag: 20.05.1994
(51) Int. Cl.: D21C 5/02, D21C 9/08

(54) **VERFAHREN ZUR AUFBEREITUNG VON ALTPAPIER**
METHOD OF PROCESSING RECYCLED PAPER
PROCEDE DE TRAITEMENT DES VIEUX PAPIERS

(30) Priorität: 26.05.1993 DE 4317305
(43) Veröffentlichungstag der Anmeldung: 17.05.1995
(73) Patentinhaber: J.M. Voith GmbH, D-89522 Heidenheim (DE)
(72) Erfinder: VON GRUMBKOW, Michael, D-89522 Heidenheim (DE); KONECSNY, Helmut, Baulkham Hills, NSW 2153 (AU)
(74) Vertreter: Weitzel, Wolfgang, Dr.-Ing. Patentanwalt
(86) Internationale Anmeldenummer: EP9401632
(87) Internationale Veröffentlichungsnummer: WO9428235

(56) Entgegenhaltungen:
- DE-A- 3 610 939
- DE-A- 3 804 006
- DE-C- 405 218
- PATENT ABSTRACTS OF JAPAN vol. 16, no. 548 (C-1005) 18. November 1992 & JP,A,04 209 880 (KANZAKI PAPER MFG. CO. LTD.) 31. Juli 1992

## Beschreibung

Die Erfindung betrifft ein Verfahren entsprechend dem Oberbegriff des Patentanspruches 1. Es handelt sich um ein übliches Verfahren, soweit es die Apparaturen, nämlich den Stofflöser, Entstipper, Sortierer und Hydrozyklone (Cleaner) betrifft.

Das Problem, das der Erfindung zugrunde liegt, sind die Wachse, Hotmelts und sonstige Kleber (Stickies), die nur schwer aus dem Altpapier zu entfernen sind und zu erheblichen Schwierigkeiten, insbesondere auf der Papiermaschine führen. Auch andere, insbesondere die genannten Aufbereitungsapparaturen können davon betroffen sein.

DE-A-3804006 beschreibt ein Verfahren zum Entfernen von klebrigen Verunreinigungen während der Faserstoffaufbereitung aus Altpapier. Dieses wird in einen Eindicker mit der Bezeichnung "Variosplit" ausgeführt, wobei die Verunreinigungen nicht mit dem Eindickerwasser abgeschieden, sondern von der Oberfläche eines Zylinders mit Hilfe eines Schabers entfernt werden.

DE-C-405218 beschreibt ein Verfahren zur Rückgewohnung von in Altpapier enthaltenen fertartigen Stoffen, die in entsprechend erhitztem Wasser schmelzbar und spezifisch leichter als dieses sind wobei die zerkleinerten Papierabfälle zusammen mit dem heißen Wasser von über 60°C in einem Behälter, gegebenfalls under Zerfaserung, in Bewegung gehalten und hierbei durch ein oben im Behälter angebrachtes Sieb am Aufsteigen verhindert werden, so daß nur das geschmolzene Fett durch das Sieb hindurchtritt und von dort entfernt werden.

Durch das erfindungsgemäße Verfahren wird im Stofflöser unter hoher Scherwirkung bei Temperaturen von mindestens 60° C der Kleberanteil und Wachse stark und fein dispergiert, so daß eine Abscheidung mit dem Filtrat der Eindickmaschine möglich ist. Der Anteil der klebenden Bestandteile und Wachse im gesamten Altpapier kann schon bei 0,1 % unzulässig sein, weil die entsprechenden Schwierigkeiten damit schon auftreten. Oft ist es sogar so, daß der Anteil der Kleber und Wachse bei einem großen Anteil brauner Papiere, bzw. brauner Sorten, bei 8 % liegen kann.

Durch das erfindungsgemäße Verfahren tritt eine weitgehende Reinigung aufgrund der Dispergierung der Wachse und Kleber ein, so daß die genannten Schwierigkeiten praktisch vermieden werden. Der erwähnte Wachsanteil kommt überwiegend aus gewachsten Pappen.

Im allgemeinen reicht eine Temperatur von mindestens 60° C, die aber auch etwas höher gewählt werden kann, und die Bearbeitungszeit im Stofflöser, um die Dispergierung zu erreichen, beträgt zwischen 15 und 30 Minuten im allgemeinen.

Vorzuziehen ist für die Reinigung des Eindickerfiltrats die Mikroflotation oder auch eine andere Filtration mit einem entsprechenden Filter, wobei Scheibenfilter bekanntermaßen üblich sind.

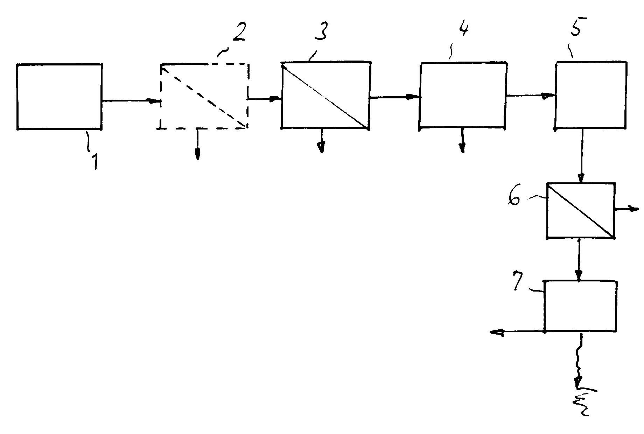

In der Figur sind die entsprechenden Apparate angedeutet, und zwar mit 1 der Stofflöser, in den das Altpapier samt Auflösechemikalien eingeleitet wird, dann gegebenenfalls auch ein Entstipper 2, dann Sortiermaschinen, wie z.B. ein Turboseparator 3 (auch Turbosorter oft genannt) und weitere Siebsortierer 4 (vorzugsweise die bekannten Sichter, z.B. Vertikalsichter), dann Hydrozyklone 5 (auch oft Cleaner genannt). Schließlich ist hier die Eindickmaschine mit 6 angedeutet. Erforderliche Nebenkreisläufe für die Rejectanteile sind hier nicht weiter ausgeführt. An die Eindickmaschine schließt sich hinsichtlich des Filtratanteils die Mikroflotationsstufe 7 an. Man gewinnt hier wiederverwendbares Klarwasser sowie einen Anteil zu verwerfenden Schmutzes, der die Kleber und Wachse enthält.

Die Temperatur im Stofflöser kann vorzugsweise durch Einleitung von Dampf erzuegt werden. Man kann aber auch mittels Wärmetauscher erhitztes Wasser vorsehen.

Es empfiehlt sich, im Eindicker 6 eine Temperatur von weniger oder höchstens 50° C zu haben, damit die Kleberund Wachspartikel relativ fest sind, um besser das Filtergewebe zu passieren. Bei einer Verwendung einer nicht sehr viel höheren Temperatur als 60° C im Stofflöser erfolgt durch die natürliche Wärmeabstrahlung ohnehin eine Absenkung der Temperatur bis zum Eindicker 6 auf den erwähnten Grenzwert oder darunter. Auch eine Abscheidung der Kleber bei höherer Temperatur ist zu erwarten.

Bei ausreichender Dispergierung kann etwa 80 % der Wachse und Kleber mit dem Eindickerfiltrat abgeschieden werden. Dazu sind entsprechend hohe Scherkräfte im Stofflöser nötig, die durch entsprechend hohen Umtrieb bei hohen Drehzahlen des mit Wendelflächen versehenen heute üblichen Rotors erreicht werden. Auch eine hohe Konsistenz von mindestens 8 % ist dafür günstig.

## Patentansprüche

1. Verfahren zum Aufbereiten von Altpapier, das mit Wachsen, Hotmelts oder sonstigen Klebern (Stickies) so stark belastet ist, daß eine Störung auf der Papiermaschine zu erwarten ist, unter Auflösung in einem Stofflöser (1) sowie weiteren Aufbereitungsstufen, die Entstipper (2), Sortierer (4) und Hydrozyklone (Cleaner) (5) enthalten können, dadurch gekennzeichnet, daß die Auflösung bei einer Temperatur von mindestens 60° C unter Einwirkenlassen hoher Scherwirkung auf das Altpapier erfolgt, und daß im Aufbereitungsstrang vorzugsweise nach den genannten Aufbereitungsstufen eine Eindickung erfolgt, um die im Stofflöser fein dispergierten Wachse, Hotmelts und Stickies zum überwiegenden bzw. sehr großen Teil mit dem Eindickerwasser abzuscheiden.

2. Verfahren nach Anspruch 1, dadurch gekennzeichnet, daß das Eindickerwasser (Filtrat der Eindickstufe) (6) in einer Mikroflotationsstufe, Filtrationsstufe oder normalen Flotationsstufe (selektive Flotation) von den Verunreinigungen gereinigt wird.

3. Verfahren nach Anspruch 1 oder 2, dadurch gekennzeichnet, daß die Aufbereitungskonsistenz im Stofflöser (1) mindestens 8 % beträgt.

## Claims

1. Process for preparation of waste paper contaminated with wax, hot melts or other adhesives (stickies) so severely that faults on the paper machine are to be expected, by dissolution in a pulper (1) and further preparation stages which may include deflakers (2), separators (4) and hydrocyclones (cleaners) (5), characterised in that the dissolution takes place at a temperature of at least 60°C under the effect of high shear forces on the waste paper, and that in the preparation line, preferably after the said preparation stages, decking takes place in order to precipitate with the decking water the greatest or a very great part of the wax, hot melts and stickies finely dispersed in the pulper.

2. Process according to Claim 1, characterised in that the decker water (filtrate from decking stage) (6) is cleaned of contaminants in a microflotation stage, filtration stage or normal flotation stage (selective flotation).

3. Process according to Claim 1 or 2, characterised in that the preparation consistency in the pulper (1) is at least 8 %.

## Revendications

1. Procédé de traitement de vieux papiers qui sont tellement chargés en cires, colles thermofusibles et autres produits collants (stickies), qu'ils peuvent provoquer des problèmes sur machine à papier par broyage dans un pulpeur (1) ainsi que dans d'autres étapes de traitement qui peuvent comprendre les dépastilleurs (2), les classificateurs (4) et les hydrocyclones (cleaner) (5),
caractérisé en ce que
la désagrégation a lieu à une température d'au moins 60°C sous l'effet de forces de cisaillement importantes sur les vieux papiers, et que sur la ligne de traitement, après les étapes de traitement citées a lieu un épaississement pour séparer, avec l'eau de l'épaississeur, les cires, colles thermofusibles et produits collants (stickies) finement dispersés dans le pulpeur.

2. Procédé selon la revendication 1,
caractérisé en ce que
l'eau de l'épaississeur (filtrat de l'étape de l'épaississeur) (6) est épurée dans une étape de microflottation, une étape de filtration ou une étape de flottation normale (flottation sélective) pour éliminer les impuretés.

3. Procédé selon la revendication 1 ou 2,
caractérisé en ce que
la consistance de traitement dans le désagrégateur (1) représente au moins 8 %.
